# EUROPÄISCHE PATENTSCHRIFT

(11) **EP 2 013 054 B1**
(45) Veröffentlichungstag und Bekanntmachung des Hinweises auf die Patenterteilung: **24.12.2014**
(21) Anmeldenummer: 07723865.7
(22) Anmeldetag: 02.04.2007
(51) Int. Cl.: B60K 35/00

(54) **MULTIFUNKTIONSBEDIENEINRICHTUNG UND RADIONAVIGATIONSSYSTEM FÜR EIN KRAFTFAHRZEUG**
MULTIFUNCTIONAL OPERATOR CONTROL AND RADIO NAVIGATION SYSTEM FOR A MOTOR VEHICLE
DISPOSITIF DE COMMANDE MULTIFONCTIONS ET SYSTÈME DE RADIONAVIGATION POUR UN VÉHICULE AUTOMOBILE

(30) Priorität: 21.04.2006 DE 102006018672
(43) Veröffentlichungstag der Anmeldung: 14.01.2009
(73) Patentinhaber: Volkswagen Aktiengesellschaft, 38440 Wolfsburg (DE)
(72) Erfinder: MEDLER, Andreas, 38268 Lengede (DE); MICHAELIS, Jan, 10711 Berlin (DE); HAUSCHILD, Frank, 10587 Berlin (DE); HAN, Kyoung Sun, 10825 Berlin (DE)
(86) Internationale Anmeldenummer: PCT/EP2007/002924
(87) Internationale Veröffentlichungsnummer: WO 2007/121831

(56) Entgegenhaltungen:
- DE-A1- 19 941 945
- DE-A1-102005 011 094
- US-A1- 2003 023 352
- US-A1- 2004 095 366

## Beschreibung

Die Erfindung betrifft eine Multifunktionsbedieneinrichtung für ein Kraftfahrzeug mit mehreren Bedienelementen, wobei über die Bedienelemente Funktionsgruppen und/oder den Funktionsgruppen untergeordnete Funktionen bedienbar sind, die Funktionsgruppen eine oder mehrere Menüebenen, die über eine Anzeigeeinrichtung darstellbar sind, aufweisen, eine oder mehrere Funktionsgruppen aktiv sind und mit einer Anzeigeeinrichtung mindestens eine ausgewählte Funktionsgruppe aus der Gruppe der aktiven Funktionsgruppen und/oder mindestens eine der ausgewählten Funktionsgruppe untergeordnete Funktion darstellbar ist, sowie ein Radionavigationssystem für ein Kraftfahrzeug mit einer Multifunktionsbedieneinrichtung.

Eine Multifunktionsbedieneinrichtung für ein Kraftfahrzeug, insbesondere zur Bedienung von Funktionsgruppen, wie Navigation oder Radio, und zur Information des Fahrers während der Fahrt, ist beispielsweise aus der DE 10 2005 011 094 A1 bekannt. Diese Multifunktionsbedieneinrichtung weist eine Bedieneinheit sowie eine Anzeigeeinheit zur Darstellung der gewünschten Informationen auf, wobei in der Anzeigeeinheit gleichzeitig mehrere Funktionen darstellbar sind, beispielsweise die Drehzahl, die Geschwindigkeit und die Landkarte eines Navigationssystems. Ferner verfügt das bekannte Informationssystem über eine Telefonfunktion sowie eine Radio- und Multimediafunktion. Dabei können mehrere Grundfunktionen gleichzeitig aktiv sein, beispielsweise ein aktivierter Radioempfang und ein aktiviertes Navigationssystem, jedoch werden von diesen beiden aktiven Funktionen nur eine Funktion auf der Anzeigeeinheit dargestellt. Will nun der Fahrer einen neuen Radiosender wählen, so wird über eine geeignete Eingabe die Funktionsgruppe Radio aktiviert und auf der Anzeigeeinheit dargestellt. Mit anderen Worten, bei einem Zugriff auf eine neue Funktionsgruppe wird die Darstellung der aktiven derzeitigen Funktionsgruppe verlassen und das System holt die neue Funktionsgruppe in den Vordergrund und stellt sie auf der Anzeigeeinheit dar, während die andere aktive Funktionsgruppe in den Hintergrund gerückt wird und keine Darstellung erfolgt.

Ferner sind Multifunktionsbedieneinrichtungen bekannt, bei denen das Navigationssystem mit Radio-, Multimedia- und Telefonfunktionen neben der eigentlichen Navigationsfunktion, beispielsweise mittels GPS, ausgestattet sind. Die Anwahl der Hauptfunktion erfolgt dabei über funktionsspezifische Bedienelemente, wobei auch hier ein Wechsel von der Navigationsfunktion zur Telefonfunktion ein Verlassen der Navigationsfunktion bedeutet.

Auch hier ist der Zugriff auf alle Funktionen nur innerhalb der aktiven Menüstruktur der ausgewählten Funktionsgruppe möglich, wobei für Spezialfunktionen, wie beispielsweise die Lautstärkeregelung der Radiowiedergabe ein separates zusätzliches Bedienelement vorgesehen ist, dessen Funktionsbelegung nicht verändert werden kann.

Der nächstliegende bekanntgewordene Stand der Technik ist der US 2003/023352 zu entnehmen.

Der Erfindung liegt daher die Aufgabe zugrunde, eine Multifunktionsbedieneinrichtung sowie ein Radio-Navigationssystem für ein Kraftfahrzeug zu schaffen, die einen einfacheren und erweiterten Zugriff auf momentan nicht angezeigte Funktionsgruppen ermöglichen.

Diese Aufgabe wird durch eine Multifunktionsbedieneinrichtung mit den Merkmalen des Anspruchs 1 sowie durch ein Radio-Navigationssystem mit den Merkmalen des Anspruchs 8 gelöst. Bevorzugte Ausgestaltungen der Erfindung sind Gegenstand der Unteransprüche.

Die erfindungsgemäße Multifunktionsbedieneinrichtung für ein Kraftfahrzeug weist mehrere Bedienelemente auf, wobei über die Bedienelemente Funktionsgruppen und/oder den Funktionsgruppen zugehörige Funktionen bedienbar sind, die Funktionsgruppen eine oder mehrere Menüebenen aufweisen, die über mindestens eine Anzeigeeinrichtung, beispielsweise einen Bildschirm, darstellbar sind. Es können dabei mehrere Funktionsgruppen aktiv sein, wobei auf der Anzeigevorrichtung der Multifunktionsbedieneinrichtung im Wesentlichen nur eine ausgewählte Funktionsgruppe aus der Gruppe der aktiven Funktionsgruppen dargestellt wird bzw. ist. Innerhalb der ausgewählten und dargestellten Funktionsgruppe kann erfindungsgemäß über Bedienelemente auf mindestens eine weitere aktive Funktionsgruppe und/oder mindestens eine den nicht ausgewählten, aber aktiven Funktionsgruppen zugehörige Funktionen zugegriffen werden, ohne den Kontext der ausgewählten bzw. dargestellten Funktionsgruppe zu verlassen. Mit anderen Worten, es ist eine Einrichtung vorgesehen, mit der auf mindestens eine weitere, im Hintergrund laufende Funktionsgruppe oder mindestens eine deren Funktionen zugegriffen werden kann, ohne dass die Darstellung der ausgewählten Funktionsgruppe verlassen wird. Dies bedeutet in einem Beispiel, dass bei einer Kartendarstellung des Navigationssystems der Sender des im Hintergrund laufenden Radios verändert werden kann, ohne dass die Grunddarstellung der Karte der Funktionsgruppe Navigation verlassen wird.

Vorzugsweise wird dies erreicht, indem der Zugriff auf eine nicht ausgewählte aktive Funktionsgruppe oder eine einer nicht ausgewählten aktiven Funktionsgruppe zugeordneten Funktion, die auch Unterfunktionen aufweisen kann, durch eine Popup-Darstellung bzw. ein Popup-Menü bedienbarer Funktionen dieser nicht ausgewählten jedoch aktiven Funktionsgruppe oder bedienbarer Unterfunktionen oder Parameter, beispielsweise Radiosender oder Navigationsziele, einer einer nicht ausgewählten aktiven Funktionsgruppe zugeordnete Funktion innerhalb der Darstellung der ausgewählten Funktionsgruppe bewirkt wird.

Vorzugsweise erfolgt der Zugriff auf eine nicht ausgewählte aktive Funktionsgruppe oder auf eine einer nicht ausgewählten aktiven Funktionsgruppe untergeordneten Funktion über einen Statusanzeiger, der genau dieser Funktionsgruppe oder Funktion zugeordnet ist. Mit anderen Worten, einer im Hintergrund laufenden aktiven Funktionsgruppe oder einer einer im Hintergrund laufenden Funktionsgruppe zugeordneten Funktion wird ein separater Statusanzeiger zugeordnet, so dass der Bediener über diesen Statusanzeiger ein Popup-Menü der gewünschten, im Hintergrund laufenden aktiven Funktionsgruppe oder der einer im Hintergrund laufenden Funktionsgruppe zugeordneten Funktion innerhalb der ausgewählten Funktionsgruppe bewirken kann, so dass der Kontext der ausgewählten Funktionsgruppe nicht verlassen wird.

Nach einer Ausführung der Erfindung kann das Popup-Menü neben den Bedienanzeigen auch eine Informationsanzeige von Funktionen oder Parametern der nicht ausgewählten aktiven Funktionsgruppe aufweisen.

Vorzugsweise wird die Anzeigevorrichtung durch eine Touch-Screen-Anzeige, mit anderen Worten durch einen Touch-Screen-Display, realisiert, wobei in einer bevorzugten Ausführungsform der Statusanzeiger einer aktiven, nicht ausgewählten Funktionsgruppe durch ein Touch-Screen-Bedienelement, dem ein Popupmenü zugeordnet ist, gebildet wird.

Vorzugsweise sind die Menüebenen einer Funktionsgruppe hierarchisch geordnet, so dass der Bediener von einer Menüebene zur nächsten wechseln kann.

In einer Ausführungsform der Erfindung ist die im vorangegangenen beschriebene Multifunktionsbedieneinrichtung Teil eines ein Radio-Navigationssystems bzw. Infotainmentsystems oder mit diesem zur Bedienung des Radio-Navigationssystems bzw. Infotainmentsystems verbunden, wobei das Radio-Navigationssystem zumindest die Funktionsgruppen "Navigation", "Radio" und "Media-Wiedergabe" sowie zur Navigation eine GPS-Einheit aufweist. Unter Media-Wiedergabe wird bevorzugt ein CD-Player und/oder DVD-Player und/oder MP3-Player verstanden. Ferner kann das Radio-Navigationssystem eine eine Telefonfunktionsgruppe betreffende Funktionsgruppe aufweisen, d.h. das Radio-Navigationssystem ist über eine entsprechende mobile Funkverbindung mit einem geeigneten Mobilfunk-Telefonnetz verbunden bzw. mit diesem verbindbar.

Vorteilhafterweise wird durch das erfindungsgemäße System der Zugriff auf Funktionen von im Hintergrund ablaufenden aktiven Funktionsgruppen ermöglicht, ohne die im Vordergrund laufende bzw. dargestellte ausgewählte Funktionsgruppe zu verlassen.

Eine bevorzugte Ausführung der Erfindung wird nachfolgend anhand der Zeichnungen erläutert. Dabei zeigt
- Fig. 1: eine schematische Draufsicht auf ein Radio-Navigationssystem mit aktivem Navigationssystem,
- Fig. 2: die Einblendung der Funktionsgruppe Radio,
- Fig. 3: die Einblendung der Funktionsgruppe CD-MP3-Player, und
- Fig. 4: die Einblendung von Telefongesprächsdaten in dem Navigationskontext.

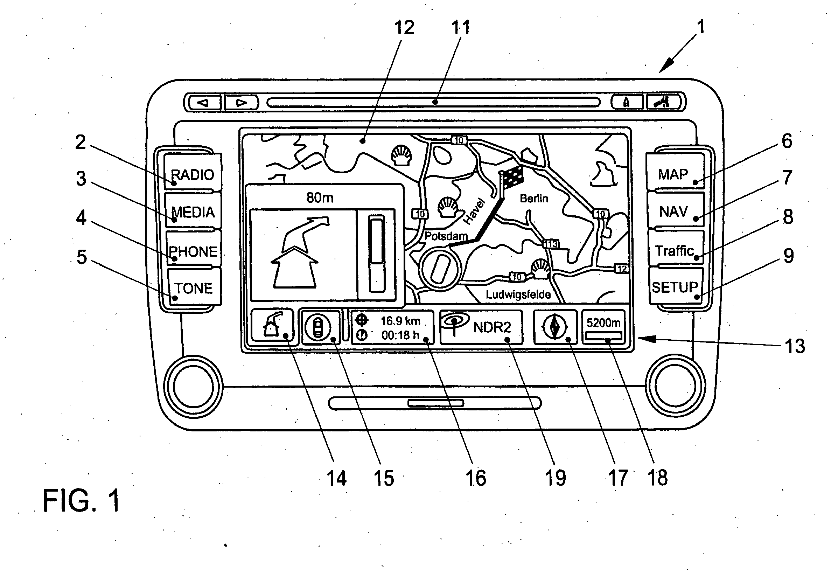

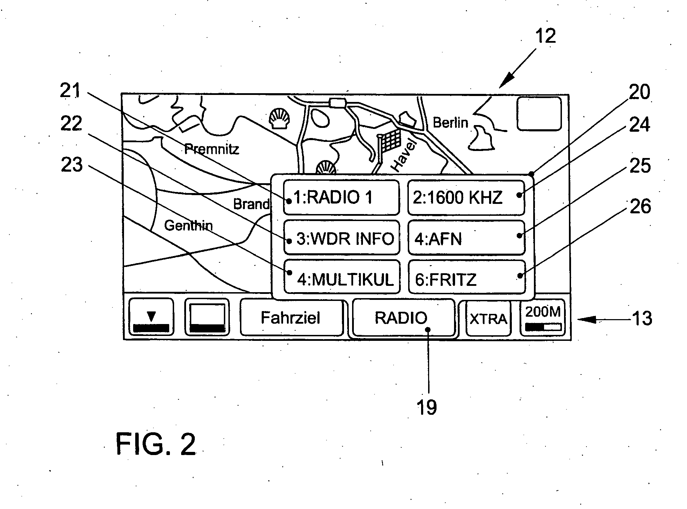

Fig. 1 zeigt ein Infotainmentsystem mit einer Multifunktionsbedieneinrichtung 1, umfassend feste, als Tasten ausgebildete Bedienelemente 2 bis 9 für die Bedienung der Funktionsgruppen Radio 2, Media 3, Telefon 4, Toneinstellung 5, Karte 6, Navigation 7, Verkehr 8 und Einstellungen 9. Diese Bedienelemente 2 bis 9 sind links und rechts am Rande einer Anzeigeeinrichtung 10 angeordnet, der in Form eines Touch-Screen-Displays ausgebildet ist. Oberhalb des Bildschirms 10 ist eine Aufnahme für eine CD bzw. DVD 11 mit entsprechenden Bedienelementen angeordnet, die hier nicht von Interesse sind, so dass eine Erläuterung hier unterbleibt. Auf dem Touch-Screen-Bildschirm 10 ist eine Stadtkarte 12 mit einer eingegebenen Route von der momentanen Position zu einem Zielort, hier Berlin, dargestellt, so dass die Funktionsgruppe Navigation des Bedienelements 7 aktiv und ausgewählt ist. Um den Zugriff auf zu mindest einige Funktionen der aktiven, im Vordergrund laufenden Funktionsgruppe Navigation zu ermöglichen, sind an der Unterseite der dargestellten Karte 12 Touch-Screen-Bedienelemente 14 bis 17 eingeblendet, mittels denen der Bediener Funktionen der Funktionsgruppe Navigation, gegebenenfalls auch über Popupmenüs abrufen kann, beispielsweise mittels der Touch-Screen-Bedientaste 14 den unmittelbar vor ihm befindlichen Verlauf der gerade befahrenen Strecke bzw. Route. Innerhalb der Bedienleiste 13 der Touch-Screen-Bedienelemente ist ferner ein Bedienelement 19 vorhanden, mittels dem auf Funktionen der im Hintergrund aktiven Funktionsgruppe Radio zugegriffen werden kann, ohne dass der Kontext der Funktionsgruppe Navigation verlassen wird, was in den Fig. 2 bis 4 genauer ausgeführt wird.

Fig. 2 zeigt die auf dem Bildschirm dargestellte Karte 12 mit der Touch-Screen-Bedienleiste 13 sowie hervorgehoben das Touch-Screen-Bedienelement 19 zur Bedienung einer im Hintergrund ablaufenden Radiofunktion. Eine Bedienung de Touch-Screen-Bedienelementes 19 führt zu einer Popup-Darstellung 20 der über das Bedienelement zugänglichen Funktionen der Funktionsgruppe Radio, was hier im vorliegenden Fall durch die Darstellung von sechs weiteren Touch-Screen-Bedienelementen 21 bis 26 erfolgt, welche die derzeit möglichen anzuwählenden Sender zeigen. Eine Bedienung eine der Touch-Screen-Bedienelemente 21 bis 26 führt zu einer Anwahl des gewünschten Senders.

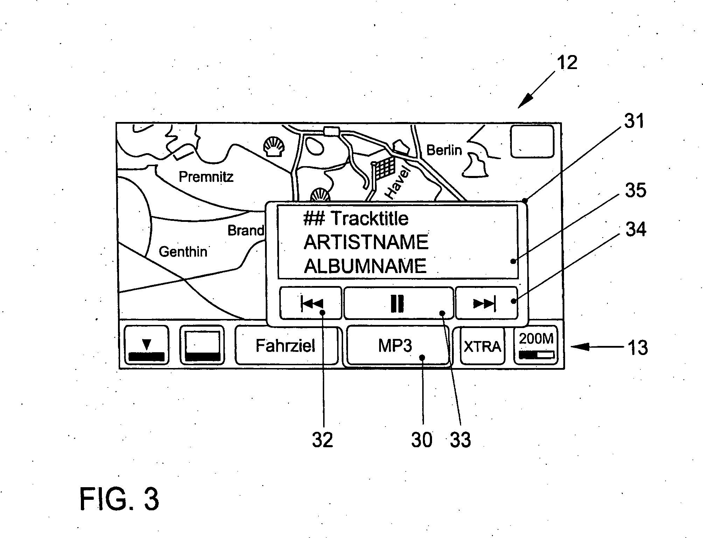

Fig. 3 zeigt eine Situation, in welcher der neben der im Vordergrund ablaufenden Funktionsgruppe Navigation ein Zugriff auf den im Hintergrund aktiven MP3-Player erfolgen kann, so dass eine Touch-Screen-Taste 30 in der Bedienleiste 13 angeordnet ist, mittels der über ein Popup-Menü 31 auf durch Touch-Screen-Bedienelemente 32, 33 und 34 dargestellte Funktionen des MP3-Players möglich ist. Ferner gehört zu dem Popup-Menü 31 der MP3-Funktionsgruppe eine Anzeige 35, in welcher Informationen über das aktuelle Musikstück eingeblendet werden.

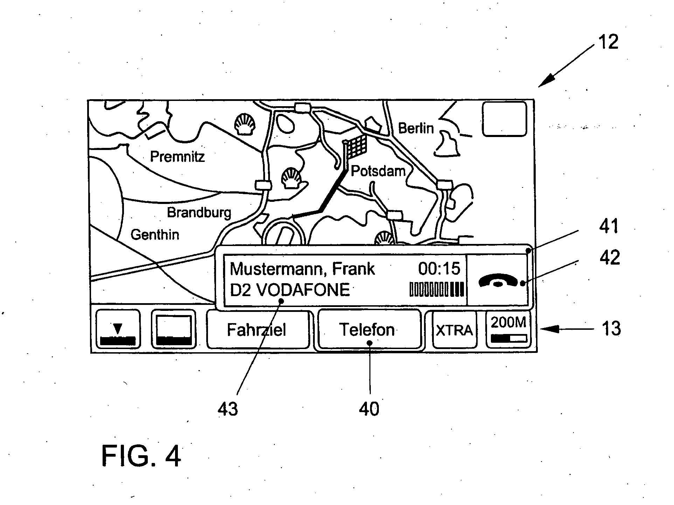

Fig. 4 zeigt die Situation, in der im Hintergrund die Funktionsgruppe Telefon aktiv ist, was durch das Bedienelement Telefon 40 in der Bedienleiste 13 angezeigt ist. Eine Bedienung des Bedienelements 40 durch den Benutzer führt zum Einblenden eines Popup-Menüs 41, in welchem ein weiteres Bedierielement 42 zum Beenden eines laufenden Telefongesprächs sowie ein Informationsfenster 43 eingeblendet wird, das dem aktuellen Gesprächsteilnehmer sowie die Gesprächsdauer, das verwendete und gegebenenfalls weitere Informationen anzeigt. Sollte kein Telefongespräch aktiv sein, ist denkbar dass das Bedienelement 42 für den Rufaufbau vorgesehen ist und im Informationsfenster 43 eine Liste von gespeicherten Rufnummern dargestellt wird, in der durch eine Listenauswahl einzelne Rufnummern ausgewählt werden können.

### Bezugszeichenliste

- 1: Radio-Navigationssystem
- 2: Radio
- 3: Media
- 4: Phone
- 5: Tone
- 6: Map
- 7: Navigation
- 8: Traffic
- 9: Set Up
- 10: Anzeigeeinrichtung
- 11: CD-/DVD-Fach
- 12: Karte
- 13: Bedienleiste
- 14-18: Touch-Screen-Bedienelemente
- 19: Touchscreen-Bedienelement einer aktiven Funktionsgruppe im Hintergrund.
- 20: Pop-Up-Menü
- 21-26: Bedienelemente

- 30: Bedienelement MP3
- 31: Pop-Up-Menü
- 32-34: Bedienelemente
- 35: Informationsfenster

- 40: Bedienelement
- 41: Pop-Up-Menü
- 42: Bedienelement
- 43: Informationsfenster

## Patentansprüche

1. Multifunktionsbedieneinrichtung (1) für ein Kraftfahrzeug mit mehreren Bedienelementen (14-18, 19, 30, 40), wobei über die Bedienelemente (14-18,19, 30, 40) Funktionsgruppen und/oder den Funktionsgruppen untergeordnete Funktionen bedienbar sind, die Funktionsgruppen eine oder mehrere Menüebenen, die über eine Anzeigeeinrichtung (10)darstellbar sind und/oder dargestellt werden, aufweisen, eine oder mehrere Funktionsgruppen aktiv sind und mit einer Anzeigevorrichtung (10) mindestens eine ausgewählte Funktionsgruppe aus der Gruppe der aktiven Funktionsgruppen und/oder mindestens eine der der ausgewählten Funktionsgruppe untergeordnete Funktion darstellbar ist und/oder dargestellt wird,
**dadurch gekennzeichnet, dass**
innerhalb von ausgewählten Funktionsgruppen auf mindestens eine nicht ausgewählte aktive Funktionsgruppe und/oder mindestens eine einer nicht ausgewählten aktiven Funktionsgruppe untergeordnete Funktion über Bedienelemente (19, 30, 40) zugegriffen werden kann, ohne den Kontext der ausgewählten Funktionsgruppe zu verlassen.

2. Multifunktionsbedieneinrichtung (1) nach Anspruch1, dadurch gekenntzeichnet, dass der Zugriff auf eine nicht ausgewählte aktive Funktionsgruppe und/oder der Funktionsgruppe untergeordnete Funktion eine Popup-Menü (20, 31, 41) mit bedienbaren Funktionen und/oder Parametern der nicht ausgewählten aktiven Funktionsgruppe und/oder der der Funktionsgruppe untergeordneten Funktion innerhalb der Darstellung der ausgewählten Funktionsgruppe bewirkt.

3. Multifunktionsbedieneinrichtung (1) nach Anspruch 2, **dadurch gekennzeichnet, dass** das Popup-Menü (20, 31, 41) Informationen der nicht ausgewählten aktiven Funktionsgruppe und/oder mindestens einer der nicht ausgewählten aktiven Funktionsgruppe untergeordneten Funktion zeigt.

4. Multifunktionsbedieneinrichtung (1) nach einem der Ansprüche 1 bis 3, **dadurch gekennzeichnet, dass** der Zugriff auf eine nicht ausgewählte aktive Funktionsgruppe und/oder eine der Funktionsgruppe untergeordnete Funktion über einen dieser Funktionsgruppe oder der Funktion zugeordneten Statusanzeiger (19) erfolgt.

5. Multifunktionsbedieneinrichtung (1) nach einem der vorangegangenen Ansprüche, **dadurch gekennzeichnet, dass** die Multifunktionsbedieneinrichtung im Wesentlichen durch eine Touchscreen-Anzeige- und Bedieneinrichtung gebildet wird.

6. Multifunktionsbedieneinrichtung (1) nach Anspruch 5, **dadurch gekennzeichnet, dass** der Statusanzeiger durch ein Touchscreen-Bedienelement (19) gebildet wird.

7. Multifunktionsbedieneinrichtung (1) nach einem der Ansprüche 1 bis 6, **dadurch gekennzeichnet, dass** die Menüebenen einer Funktionsgruppe hierarchisch geordnet sind.

8. Radio-Navigationssystem mit Multifunktionsbedieneinrichtung (1) nach einem der vorangegangenen Ansprüche, wobei das Radio-Navigationssystem zumindest die Funktionsgruppen Navigation, Radio und Medienwiedergabe aufweist.

9. Radiö-Navigationssystem nach Anspruch 8, **dadurch gekennzeichnet, dass** die Media-wiedergabe durch einen CD-, DVD- und/oder MP3-Player gebildet wird.

10. Radio-Navigationssystem nach einem der Ansprüche 8 oder 9, **dadurch gekennzeichnet, dass** das Radio-Navigationssystem eine Funktionsgruppe Telefon aufweist.

## Claims

1. Multifunction operator control device (1) for a motor vehicle having a plurality of operator control elements (14 - 18, 19, 30, 40), wherein the operator control elements (14 - 18, 19, 30, 40) can be used for the operator control of function groups and/or functions subordinate to the function groups, the function groups have one or more menu levels that can be presented and/or are presented by means of a display device (10), one or more function groups are active and a display apparatus (10) can be used to present and/or is used to present at least one selected function group from the group of active function groups and/or at least one function subordinate to the selected function group,
**characterized in that**
within selected function groups at least one unselected active function group and/or at least one function subordinate to an unselected active function group can be accessed by means of operator control elements (19, 30, 40) without leaving the context of the selected function group.

2. Multifunction operator control device (1) according to Claim 1, **characterized in that** the access to an unselected active function group and/or function subordinate to the function group prompts a popup menu (20, 31, 41) having operator controllable functions and/or parameters from the unselected active function group and/or from the function subordinate to the function group within the presentation of the selected function group.

3. Multifunction operator control device (1) according to Claim 2, **characterized in that** the popup menu (20, 31, 41) shows information from the unselected active function group and/or from at least one function subordinate to the unselected active function group.

4. Multifunction operator control device (1) according to one of Claims 1 to 3, **characterized in that** the access to an unselected active function group and/or a function subordinate to the function group is effected by means of a status indicator (19) associated with this function group or with the function.

5. Multifunction operator control device (1) according to one of the preceding claims, **characterized in that** the multifunction operator control device is formed essentially by a touch screen display and operator control device.

6. Multifunction operator control device (1) according to Claim 5, **characterized in that** the status indicator is formed by a touch screen operator control element (19).

7. Multifunction operator control device (1) according to one of Claims 1 to 6, **characterized in that** the menu levels of a function group are organized hierarchically.

8. Radio navigation system having a multifunction operator control device (1) according to one of the preceding claims, wherein the radio navigation system has at least the function groups navigation, radio and media reproduction.

9. Radio navigation system according to Claim 8, **characterized in that** the media reproduction is formed by a CD, DVD and/or MP3 player.

10. Radio navigation system according to either of Claims 8 and 9, **characterized in that** the radio navigation system has a telephone function group.

## Revendications

1. Dispositif de commande multifonction (1) pour un véhicule automobile comprenant plusieurs éléments de commande (14-18, 19, 30, 40), des groupes de fonction et/ou des fonctions subordonnées aux groupes de fonctions pouvant être commandés par le biais des éléments de commande (14-18, 19, 30, 40), les groupes de fonctions présentant un ou plusieurs niveaux de menu qui peuvent être affichés et/ou sont affichés par un dispositif d'affichage (10), un ou plusieurs groupes de fonctions étant actifs et au moins un groupe de fonctions sélectionné parmi le groupe des groupes de fonctions actifs et/ou au moins une fonction subordonnée au groupe de fonctions sélectionné pouvant être affichée et/ou étant affichée avec un dispositif d'affichage (10),
**caractérisé en ce que**
à l'intérieur des groupes de fonctions sélectionnés, il est possible d'accéder à au moins un groupe de fonctions actif non sélectionné et/ou au moins une fonction subordonnée à un groupe de fonctions actif non sélectionné par le biais des éléments de commande (19, 30, 40) sans quitter le contexte du groupe de fonctions sélectionné.

2. Dispositif de commande multifonction (1) selon la revendication 1, **caractérisé en ce que** l' accès à un groupe de fonctions actif non sélectionné et/ou à une fonction subordonnée au groupe de fonctions produit un menu contextuel (20, 31, 41), doté de fonctions et/ou de paramètres du groupe de fonctions actif non sélectionné et/ou de la fonction subordonnée au groupe de fonctions commandables, à l'intérieur de la représentation du groupe de fonctions sélectionné.

3. Dispositif de commande multifonction (1) selon la revendication 2, **caractérisé en ce que** le menu contextuel (20, 31, 41) affiche des informations du groupe de fonctions actif non sélectionné et/ou d'au moins une fonction subordonnée au groupe de fonctions actif non sélectionné.

4. Dispositif de commande multifonction (1) selon l'une des revendications 1 à 3, **caractérisé en ce que** l'accès à un groupe de fonctions actif non sélectionné et/ou une fonction subordonnée au groupe de fonctions s'effectue par le biais d'un indicateur d'état (19) associé à ce groupe de fonctions ou à la fonction.

5. Dispositif de commande multifonction (1) selon l'une des revendications précédentes, **caractérisé en ce que** le dispositif de commande multifonction est formé pour l'essentiel par un dispositif d'affichage et de commande à écran tactile.

6. Dispositif de commande multifonction (1) selon la revendication 5, **caractérisé en ce que** l'indicateur d'état est formé par un élément de commande d'écran tactile (19).

7. Dispositif de commande multifonction (1) selon l'une des revendications 1 à 6, **caractérisé en ce que** les niveaux de menu d'un groupe de fonctions sont classés hiérarchiquement.

8. Système de navigation radioélectrique équipé d'un dispositif de commande multifonction (1) selon l'une des revendications précédentes, le système de navigation radioélectrique présentant au moins les groupes de fonctions Navigation, Radio et Lecture de médias.

9. Système de navigation radioélectrique selon la revendication 8, **caractérisé en ce que** la lecture de médias est formée par un lecteur de CD, DVD et/ou MP3.

10. Système de navigation radioélectrique selon l'une des revendications 8 ou 9, **caractérisé en ce que** le système de navigation radioélectrique présente un groupe de fonctions de téléphonie.
